# EUROPÄISCHE PATENTANMELDUNG

(11) **EP 2 757 060 A1**
(43) Veröffentlichungstag der Anmeldung: **23.07.2014**
(21) Anmeldenummer: 14450003.0
(22) Anmeldetag: 22.01.2014
(51) Int. Cl.: B65G 53/42, F23K 3/02, B65G 53/28

(54) **Entnahmevorrichtung**

(30) Priorität: 22.01.2013 AT 422013
(71) Anmelder: KWB - Kraft und Wärme aus Biomasse GmbH, 8321 St. Margarethen/Raab (AT)
(72) Erfinder: Flitsch, Manfred, 8082 Kirchbach (AT); Salmhofer, Manfred, 8211 Grosspesendorf (AT)
(74) Vertreter: Gibler & Poth Patentanwälte OG

(57) **Zusammenfassung**

Bei einer Entnahmevorrichtung (11) zur Entnahme eines rieselfähigen Materials, insbesondere Brennstoff-Pellets, aus einem Materialspeicher, wobei die Entnahmevorrichtung (11) eine Entnahmeöffnung (10) und eine Fluidaustrittsöffnung (12) aufweist, wird vorgeschlagen, dass zwischen der Entnahmeöffnung (10) und der Fluidaustrittsöffnung (12) eine Zwischenplatte (6) angeordnet ist, dass die Entnahmevorrichtung (11) eine Abdeckung (4) aufweist, dass die Fluidaustrittsöffnung (12) zwischen der Abdeckung (4) und der Zwischenplatte (6) angeordnet ist, und dass die Abdeckung (4) zumindest bereichsweise die Zwischenplatte (6) überragt.

## Beschreibung

Die Erfindung betrifft eine Entnahmevorrichtung zur Entnahme eines rieselfähigen Materials gemäß dem Oberbegriff des Patentanspruches 1.

Es sind Entnahmevorrichtungen zur Entnahme eines rieselfähigen Materials, beispielsweise Pellets, bekannt, um dieses rieselfähige Material mittels einer Saugförderanlage aus einem Lagerraum zu einem Vorratsbehälter zu transportieren. Derartige Entnahmevorrichtungen sind auch unter dem Namen Entnahmesonden oder Saugsonden bekannt.

Hierbei sind weiters Saugförderanlagen bekannt, welche nach einem Kreislaufprinzip arbeiten. Hierbei wird an der Entnahmevorrichtung das rieselfähige Material mit einem Transportfluid, beispielsweise Luft angesaugt, das rieselfähige Material aus dem Strom des Transportfluids abgeschieden, und das gereinigte Transportfluid an der Entnahmevorrichtung wieder zurück in den Lagerraum geführt.

Nachteilig daran ist, dass derartige Entnahmevorrichtungen in der Regel ohne bewegliche mechanische Teile ausgeführt werden, welche das rieselfähige Material der Entnahmeöffnung zuführen, wodurch das rieselfähige Material eine Böschung ausbildet und es zu einer Trichterbildung kommt. Hierbei kann die Trichterbildung zu einer Brückenbildung führen, wodurch um die Entnahmevorrichtung ein stabiler Hohlraum entsteht, und kein rieselfähiges Material mehr gefördert werden kann. Dadurch kann beispielsweise das rieselfähige Material nicht mehr einer Verbrennungsanlage zugeführt werden, wodurch beispielsweise die Heizung eines Gebäudes ausfällt oder ein industrielles Verfahren unterbrochen wird.

Aufgabe der Erfindung ist es daher eine Entnahmevorrichtung der eingangs genannten Art anzugeben, mit welcher die genannten Nachteile vermieden werden können, mit welcher eine zuverlässige Ansaugung von rieselfähigem Material erreicht werden kann.

Erfindungsgemäß wird dies durch die Merkmale des Patentanspruches 1 erreicht.

Dadurch ergibt sich der Vorteil, dass das rieselfähige Material zuverlässig angesaugt werden kann, da ein großer im Wesentlichen ringförmiger Ansaugbereich um die Entnahmeöffnung erreicht werden kann. Hierbei bildet sich in Betriebslage gesehen abwärts von der Abdeckung ein großer Schüttkegel. Durch die Anordnung der Fluidaustrittsöffnung zwischen der Abdeckung und der Zwischenplatte wird das Transportfluid auf der Strecke zu der Entnahmeöffnung um die Zwischenplatte herum geleitet, wobei das Transportfluid zumindest zum Teil durch den Schüttkegel strömt und diesen auflockert und in Bewegung hält, wodurch einer Brückenbildung entgegengewirkt werden kann. Dadurch kann eine konstante und zuverlässige Zuführung von rieselfähigem Material, beispielsweise Pellets oder andere regenerative Brennstoffe, zu der Entnahmeöffnung gewährleistet werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine besonders bevorzugte Ausführungsform einer Entnahmevorrichtung im Auf riss;
Fig. 2 die besonders bevorzugte Ausführungsform der Entnahmevorrichtung im Seitenriss; und
Fig. 3 die besonders bevorzugte Ausführungsform der Entnahmevorrichtung im Grundriss.

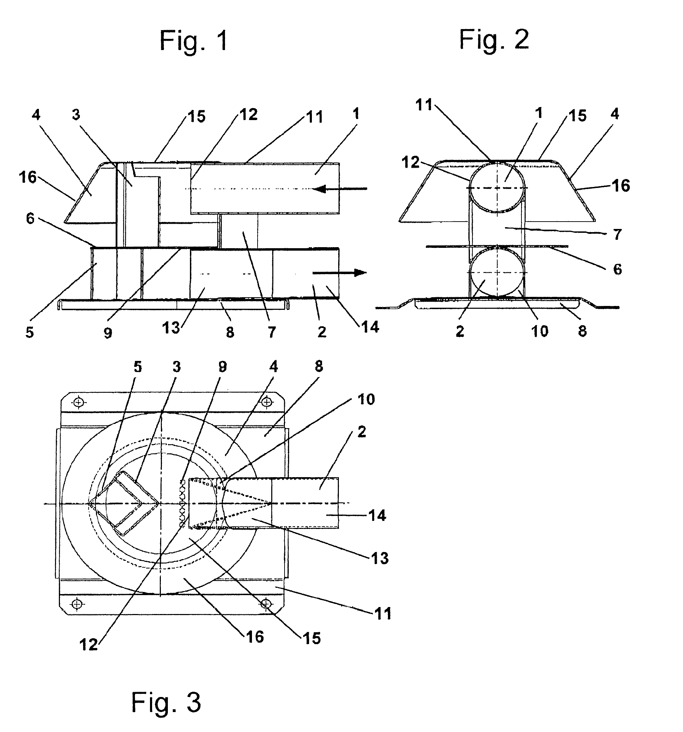

Die Fig. 1 bis 3 zeigen bevorzugte Ausführungsformen einer Entnahmevorrichtung 11 zur Entnahme eines rieselfähigen Materials, insbesondere Brennstoff-Pellets, aus einem Materialspeicher, wobei die Entnahmevorrichtung 11 eine Entnahmeöffnung 10 und eine Fluidaustrittsöffnung 12 aufweist. Das rieselfähige Material kann hierbei insbesondere ein brennbares rieselfähiges Material sein, beispielsweise Pellets, Hackgut und ähnliches. Insbesondere kann vorgesehen sein, dass die Entnahmevorrichtung 11 zur Anordnung am Boden eines Materialspeichers vorgesehen ist. Die Entnahmevorrichtung 11 kann insbesondere eine Grundplatte 8 aufweisen. Insbesondere kann die Entnahmevorrichtung 11 zur Verwendung mit einer Saugförderanlage vorgesehen sein. Hierfür kann insbesondere die Entnahmeöffnung 10 zur Verbindung mit einer Saugseite einer Saugförderanlage, und die Fluidaustrittsöffnung 12 zur Verbindung mit einer Druckseite einer Saugförderanlage vorgesehen sein.

Die eine Entnahmeöffnung 10 und die Fluidaustrittsöffnung 12 können insbesondere parallel zueinander angeordnet sein, also in die gleiche Richtung weisen.

Weiters kann vorgesehen sein, dass die Entnahmeöffnung 10 und die Fluidaustrittsöffnung 12 im Wesentlichen den gleichen Querschnitt aufweisen, also im Wesentlichen glich groß sind.

Die Entnahmeöffnung 10 dient hierbei der Entnahme des rieselfähigen Materials, welches zusammen mit einem Transportfluid, beispielsweise Luft, durch die Entnahmeöffnung 10 eingesaugt wird. Die Entnahmeöffnung 10 kann Teil einer Entnahmeleitung 2 sein, welche mit einer Saugförderanlage verbunden werden kann, bzw. mit einer Saugförderanlage verbunden ist. Die Fluidaustrittsöffnung 12 dient zur Rückführung des Transportfluids in den Bereich der Entnahmeöffnung 10, wobei das rückgeführte Transportfluid das rieselfähige Material zusätzlich aufwühlt. Die Fluidaustrittsöffnung 12 kann Teil einer Fluidzugangsleitung 1 sein, welche mit einer Saugförderanlage verbunden werden kann, bzw. mit einer Saugförderanlage verbunden ist. In der vorgesehenen Betriebslage kann die Fluidaustrittsöffnung 12 insbesondere oberhalb der Entnahmeöffnung 10 angeordnet sein.

Vorgesehen ist, dass zwischen der Entnahmeöffnung 10 und der Fluidaustrittsöffnung 12 eine Zwischenplatte 6 angeordnet ist, dass die Entnahmevorrichtung 11 eine Abdeckung 4 aufweist, dass die Fluidaustrittsöffnung 12 zwischen der Abdeckung 4 und der Zwischenplatte 6 angeordnet ist, und dass die Abdeckung 4 zumindest bereichsweise die Zwischenplatte 6 überragt. Das die Zwischenplatte 6 zwischen der Entnahmeöffnung 10 und der Fluidaustrittsöffnung 12 angeordnet ist bedeutet hierbei insbesondere, dass die Zwischenplatte 6 entlang einer Richtung, insbesondere einer Vertikalen, zwischen der Entnahmeöffnung 10 und der Fluidaustrittsöffnung 12 angeordnet ist. Die Abdeckung 4 kann insbesondere als Dach ausgebildet sein. Dadurch kann einerseits das rieselfähige Material an einem Eintreten in die Fluidaustrittsöffnung 12 gehindert werden. Weiters sorgt die Abdeckung 4 für einen konstanten Böschungswinkel des von oben nachrückenden rieselfähigen Materials und vermindert weiters die Wahrscheinlichkeit einer Brückenbildung des rieselfähigen Materials oberhalb der Entnahmevorrichtung 11.Die Zwischenplatte 6 bewirkt hierbei, dass das Transportmedium von der Fluidaustrittsöffnung 12 um die Zwischenplatte 6 geleitet wird, und dadurch das Transportfluid aus einem großen Ansaugbereich auf die Entnahmeöffnung 10 zuströmt. Dass die Abdeckung 4 die Zwischenplatte 6 zumindest bereichsweise 6 überragt bedeutet in diesem Sinne, dass in Betriebslage der Entnahmevorrichtung 11 von oben betrachtet zumindest Teile der Abdeckung 4 über die Zwischenplatte 6 hinausragen, wodurch sich in diesem Bereich von einem Rand der Abdeckung 4 ein Schüttkegel nach unten ausbilden kann, wobei die Zwischenplatte 6 das Ausbilden eines Schüttkegels nicht behindert.

Dadurch ergibt sich der Vorteil, dass das rieselfähige Material zuverlässig angesaugt werden kann, da ein großer im Wesentlichen ringförmiger Ansaugbereich um die Entnahmeöffnung 10 erreicht werden kann. Hierbei bildet sich in Betriebslage gesehen abwärts von der Abdeckung 4 ein großer Schüttkegel. Durch die Anordnung der Fluidaustrittsöffnung 12 zwischen der Abdeckung 4 und der Zwischenplatte 6 wird das Transportfluid auf der Strecke zu der Entnahmeöffnung 10 um die Zwischenplatte 6 herum geleitet, wobei das Transportfluid zumindest zum Teil durch den Schüttkegel strömt und diesen auflockert und in Bewegung hält, wodurch einer Brückenbildung entgegengewirkt werden kann. Dadurch kann eine konstante und zuverlässige Zuführung von rieselfähigem Material, beispielsweise Pellets oder andere regenerative Brennstoffe, zu der Entnahmeöffnung 10 gewährleistet werden.

Hierbei kann insbesondere vorgesehen sein, dass die Abdeckung 4 die Zwischenplatte 6 im Wesentlichen allseitig überragt. Mit anderen Worten, dass die Abdeckung 4 im Wesentlichen allseitig über die Zwischenplatte 6 hinaus ragt, dadurch kann verhindert werden, dass sich rieselfähiges Material auf der Zwischenplatte 6 ansammelt und ein Nachrutschen von rieselfähigem Material im Schüttkegel unterbindet.

Insbesondere kann vorgesehen sein, dass die Abdeckung 4 die Zwischenplatte 6 derart überragt, dass ein Rand der Zwischenplatte 6 und ein Rand der Abdeckung 4 im Wesentlichen an einen gedachten Kreiskegel angrenzen, wobei eine Spitze des Kreiskegels in Betriebslage unterhalb der Entnahmevorrichtung 11 angeordnet ist und welcher Kreiskegel einen Öffnungswinkel von 90° bis 140° aufweist. Dadurch kann sich um die Abdeckung 4 ein Schüttkegel ausbilden, welcher knapp am Rand der Zwischenplatte 6 vorbei führt, wodurch das Transportfluid gut durch den Schüttkegel geleitet werden kann.

Die Zwischenplatte 6 kann hierbei besonders bevorzugt kreisförmig ausgebildet sein. Dadurch kann eine besonders gleichmäßige Ansaugung des rieselfähigen Materials von allen Seiten erfolgen.

Besonders bevorzugt kann vorgesehen sein, dass ein Randbereich der Abdeckung 4 zumindest bereichsweise in Richtung der Zwischenplatte 6 gebogen ist. Dadurch kann eine Ablenkung des Stroms des Transportfluids nach unten erfolgen, wodurch ein großer Teil des Impulses des Transportfluids aus der Fluidaustrittsöffnung 12 zur Zuführung des rieselfähigen Materials zur Entnahmeöffnung 10 verwendet werden kann.

Insbesondere kann vorgesehen sein, dass die Abdeckung 4 im Wesentlichen kegelstumpfförmig ausgebildet ist. Hierbei kann die Abdeckung 4, wie in den Fig. 1 und 2 gut ersichtlich, eine Deckfläche 15 aufweisen, welche insbesondere parallel zur Zwischenplatte 6 angeordnet sein kann. Die Deckfläche 15 kann weiters im Wesentlichen die gleiche Form wie die Zwischenplatte 6 aufweisen. Von der Deckfläche 15 kann sich dann eine kegelförmige Mantelfläche 16 in Richtung Grundplatte erstrecken. Die kegelförmige Mantelfläche 16 kann insbesondere die Mantelfläche eines Rotationskegels sein. Es sind aber auch andere Kegelformen mit anderen als kreisförmige Leitlinien möglich, beispielsweise eine elliptische oder rechteckige Leitkurve. Die kegelförmige Mantelfläche 16 kann insbesondere einen Winkel von 30° bis 60° zu einer Ebene der Deckfläche 15 einschließen.

Weiters kann vorgesehen sein, dass sich die Mantelfläche 16 über mindestens 50% des Abstandes zwischen Deckfläche 15 und Zwischenplatte 6 erstreckt. Dadurch wirkt die Abdeckung 4 und die Zwischenplatte 6 zusammen wie eine ringförmig um die Entnahmeöffnung 10 angeordnete Düse, welche das rieselfähige Material aus einem weiten Bereich des Materialspeichers der Entnahmeöffnung 10 zuführt. Durch die vorteilhafte Ausbildung der Entnahmeöffnung 10 kann diese hierbei besonders gut auch seitlich eindringendes rieselfähiges Material ansaugen, ohne dass es zu einer Verringerung der Saugleistung kommt.

Besonders bevorzugt kann hierbei vorgesehen sein, dass zwischen der Zwischenplatte 6 und der Abdeckung 4 ein erstes Strömungsführungselement 3 angeordnet ist. Das erste Strömungsführungselement 3 kann insbesondere in einer Verlängerung der Fluidzugangsleitung 1 angeordnet sein. Dieses erste Strömungsführungselement 3 kann besonders bevorzugt keilförmig ausgebildet sein, wobei eine Kante des keilförmigen Strömungsführungselementes 3 der Fluidaustrittsöffnung 12 zugewandt sein kann. Dieses erste Strömungsführungselement 3 kann dadurch einen Strom des aus der Fluidaustrittsöffnung 12 austretenden Transportfluids umlenken und für eine besonders gleichmäßige seitliche Zuführung von rieselfähigem Material sorgen.

Weiters kann insbesondere vorgesehen sein, dass eine Höhe der Abdeckung 4 größer ist als eine Höhe der Fluidaustrittsöffnung 12. Weiters kann hierbei insbesondere vorgesehen sein, dass die Fluidaustrittsöffnung 12 angrenzend an einem höchsten Punkt einer Unterseite der Abdeckung 4, also insbesondere der Deckfläche 15, angeordnet ist. Dadurch kann der Strom des Transportfluids von der Abdeckung 4 besonders gut nach unten abgelenkt werden, wodurch eine gute nach unten gerichtete Düsenwirkung zwischen der Abdeckung 4 und der Zwischenplatte 6 erreicht werden kann, wodurch das rieselfähige Material besonders gut aufgewühlt und zugeführt werden kann.

Bevorzugt kann vorgesehen sein, dass die Entnahmeleitung 2 und die Fluidzugangsleitung 1 mittels eines Abstandhalters 7 voneinander beabstandet sind. Insbesondere kann auch die Zwischenplatte 6 am Abstandhalter 7 befestigt sein. Durch den Abstandhalter kann hierbei der Abstand der Entnahmeöffnung 10 zur Fluidaustrittsöffnung 12 und der Zwischenplatte 6 vorgegeben werden, wodurch ein gutes Strömungsverhalten des Transportfluids erreicht werden kann.

Besonders bevorzugt kann vorgesehen sein, dass die Entnahmeöffnung 10 Teil einer Entnahmeleitung 2 ist, und dass die Entnahmeleitung 2 wenigstens im Bereich der Zwischenplatte 6 in Richtung parallel zur Zwischenplatte 6 frei angeordnet ist. Mit anderen Worten ist der Bereich seitlich der Entnahmeleitung 2 einbautenfrei gehalten, also frei von einem zusätzlichen Gehäuse oder ähnliches. Dadurch kann die Ansaugung von einem besonders großen Bereich erfolgen, nämlich auch von jenen Bereichen welche benachbart zur Entnahmeleitung 2, also hinter der Entnahmeöffnung 10, sind, wodurch die Wahrscheinlichkeit einer Brückenbildung weiter verringert werden kann.

Besonders bevorzugt kann vorgesehen sein, dass ein Umfang der Entnahmeöffnung 10 wenigstens bereichsweise dem Verlauf einer Grundplatte 8 folgend ausgebildet ist. Hierbei kann insbesondere zumindest in einem Bereich der Entnahmeöffnung 10 der Übergang von der Entnahmeöffnung 10 zur Grundplatte 8 stufenlos ausgeführt sein. Dadurch, dass der Umfang der Entnahmeöffnung 10 wenigstens bereichsweise dem Verlauf der Grundplatte 8, und nicht wie bei einer herkömmlichen Entnahmeöffnung 10 rund ausgeführt ist und die Grundplatte 8 nur an einem Punkt tangiert, können auch große Stücke des rieselfähigen Materials, welche in der Regel am Boden, also auf der Grundplatte 8 aufliegen, gut angesaugt werden. Weiters kann dadurch rieselfähiges Material besonders gut von einem Bereich seitlich der Entnahmeöffnung 10 angesaugt werden, da sich das rieselfähige Material weniger an einem Rand der Entnahmeöffnung 10 anlagert.

Besonders bevorzugt kann vorgesehen sein, dass die Grundplatte 8 als im Wesentlichen plane Platte ausgebildet ist, und dass ein Umfang der Entnahmeöffnung 10 über im Wesentlichen eine Breite der Entnahmeöffnung 10 gerade und anliegend an die Grundplatte 8 ausgebildet ist. Hierbei kann gemäß der in Fig. 2 dargestellten besonders bevorzugten Ausführungsform vorgesehen sein, dass der Querschnitt der Entnahmeöffnung 10 aus einem Halbkreis und einem Rechteck zusammengesetzt ausgebildet ist, wobei der rechteckförmige Teil der Entnahmeöffnung 10 auf der Grundplatte 8 aufliegt. Dadurch kann ein besonders ungehinderter Zugang von rieselfähigem Material zur Entnahmeöffnung 10 bereit gestellt werden, wobei rieselfähiges Material, welches auf der Grundplatte 8 aufliegt, über die gesamte Breite der Entnahmeöffnung 10 abgesaugt werden kann.

Hierbei kann insbesondere vorgesehen sein, dass eine, die Entnahmeöffnung 10 aufweisende, Entnahmeleitung 2 einen Übergangsbereich 13 von der Entnahmeöffnung 10 zu einem im Wesentlichen kreisförmigen Bereich 14 der Entnahmeleitung 2 aufweist. Dieser Übergangsbereich 13 kann insbesondere stufenlos ausgebildet sein.

Weiters kann bevorzugt vorgesehen sein, dass die Zwischenplatte 6 und die Grundplatte 8 im Wesentlichen parallel angeordnet sind. Dadurch kann zuverlässig verhindert werden, dass durch einen sich verengenden Abstand von Zwischenplatte 6 und Grundplatte 8 es zu einer Brückenbildung in diesem Bereich kommt.

Besonders bevorzugt kann vorgesehen sein, dass zwischen der Grundplatte 8 und der Zwischenplatte 6 ein zweites Strömungsführungselement 5 angeordnet ist. Das zweite Strömungsführungselement 5 kann insbesondere in einer Verlängerung der Entnahmeleitung 2 angeordnet sein. Dieses zweite Strömungsführungselement 5 kann besonders bevorzugt keilförmig ausgebildet sein, wobei eine Kante des keilförmigen zweiten Strömungsführungselementes 5 der Entnahmeöffnung 10 zugewandt sein kann. Durch dieses zweite Strömungsführungselement 5 kann erreicht werden, dass das rieselfähige Material nicht aus jenem Bereich zugeführt wird, welcher unmittelbar vor der Entnahmeöffnung 10 angeordnet ist. Dadurch bewirkt das zweite Strömungsführungselement 5 aber auch, dass sich im Bereich zwischen Grundplatte 8 und Zwischenplatte 6 kein Bogen aus dem rieselfähigen Material ausbildet, weil der Bereich, in welchem sich der Bogen bilden könnte in der Mitte durch das zweite Strömungsführungselement 5 unterbrochen ist, wodurch sich das rieselfähige Material an beiden Seiten am zweiten Strömungsführungselement 5 vorbei bewegen muss, und die Bildung eines Bogens aus verkeilten rieselfähigen Material gehindert wird. Dadurch kann das Ansaugverhalten der Entnahmevorrichtung 11 weiter verbessert werden.

Hierbei kann insbesondere vorgesehen sein, dass das erste Strömungsführungselement 3 im Wesentlichen oberhalb des zweiten Strömungsführungselementes 5 angeordnet ist.

Insbesondere kann weiters vorgesehen sein, dass in der Zwischenplatte 6, insbesondere im Bereich der Entnahmeöffnung 10, wenigstens eine, vorzugsweise eine vorgebbare Mehrzahl, Fluidbypassleitung 9 angeordnet ist. Durch die Fluidbypassleitung 9 kann das Ansaugverhalten der Entnahmevorrichtung 11 leicht reguliert werden, wodurch beispielsweise bei einem sehr rieselfähigen Material, beispielsweise mit hohem Feinanteil, die Beschickung der Entnahmeöffnung 10 mit rieselfähigem Material reguliert werden kann. Gemäß der bevorzugten Ausführungsform, insbesondere nach Fig. 3, kann die Fluidbypassleitung 9 aus einer Vielzahl an Durchbrechungen der Zwischenplatte 6 bestehen, welche im Bereich der Entnahmeöffnung 10 angeordnet sind.

## Patentansprüche

1. Entnahmevorrichtung (11) zur Entnahme eines rieselfähigen Materials, insbesondere Brennstoff-Pellets, aus einem Materialspeicher, wobei die Entnahmevorrichtung (11) eine Entnahmeöffnung (10) und eine Fluidaustrittsöffnung (12) aufweist, **dadurch gekennzeichnet, dass** zwischen der Entnahmeöffnung (10) und der Fluidaustrittsöffnung (12) eine Zwischenplatte (6) angeordnet ist, dass die Entnahmevorrichtung (11) eine Abdeckung (4) aufweist, dass die Fluidaustrittsöffnung (12) zwischen der Abdeckung (4) und der Zwischenplatte (6) angeordnet ist, und dass die Abdeckung (4) zumindest bereichsweise die Zwischenplatte (6) überragt.

2. Entnahmevorrichtung (11) nach Anspruch 1, **dadurch gekennzeichnet, dass** die Abdeckung (4) die Zwischenplatte (6) im Wesentlichen allseitig überragt.

3. Entnahmevorrichtung (11) nach Anspruch 1 oder 2, **dadurch gekennzeichnet, dass** ein Randbereich der Abdeckung (4) zumindest bereichsweise in Richtung der Zwischenplatte (6) gebogen ist.

4. Entnahmevorrichtung (11) nach einem der Ansprüche 1 bis 3, **dadurch gekennzeichnet, dass** die Abdeckung (4) im Wesentlichen kegelstumpfförmig ausgebildet ist.

5. Entnahmevorrichtung (11) nach einem der Ansprüche 1 bis 4, **dadurch gekennzeichnet, dass** eine Höhe der Abdeckung (4) größer ist als eine Höhe der Fluidaustrittsöffnung (12).

6. Entnahmevorrichtung (11) nach Anspruch 1 und 5, oder nach Anspruch 5, **dadurch gekennzeichnet, dass** zwischen der Zwischenplatte (6) und der Abdeckung (4) ein erstes Strömungsführungselement (3) angeordnet ist.

7. Entnahmevorrichtung (11) nach einem der Ansprüche 1 bis 6, **dadurch gekennzeichnet, dass** die Entnahmeöffnung (10) Teil einer Entnahmeleitung (2) ist, und dass die Entnahmeleitung (2) wenigstens im Bereich der Zwischenplatte (6) in Richtung parallel zur Zwischenplatte (6) frei angeordnet ist.

8. Entnahmevorrichtung (11) nach einem der Ansprüche 1 bis 7, **dadurch gekennzeichnet, dass** ein Umfang der Entnahmeöffnung (10) wenigstens bereichsweise dem Verlauf einer Grundplatte (8) folgend ausgebildet ist.

9. Entnahmevorrichtung (11) nach Anspruch 8, **dadurch gekennzeichnet, dass** die Grundplatte (8) als im Wesentlichen plane Platte ausgebildet ist, und dass ein Umfang der Entnahmeöffnung (10) über im Wesentlichen eine Breite der Entnahmeöffnung (10) gerade und anliegend an die Grundplatte (8) ausgebildet ist.

10. Entnahmevorrichtung (11) nach Anspruch 8 oder 9, **dadurch gekennzeichnet, dass** die Zwischenplatte (6) und die Grundplatte (8) im Wesentlichen parallel angeordnet sind.

11. Entnahmevorrichtung (11) nach einem der Ansprüche 8 bis 10, **dadurch gekennzeichnet, dass** zwischen der Grundplatte (8) und der Zwischenplatte (6) ein zweites Strömungsführungselement (5) angeordnet ist.

12. Entnahmevorrichtung (11) nach Ansprüche 1 bis 11, **dadurch gekennzeichnet, dass** in der Zwischenplatte (6), insbesondere im Bereich der Entnahmeöffnung (10), wenigstens eine, vorzugsweise eine vorgebbare Mehrzahl, Fluidbypassleitung (9) angeordnet ist.
